# EUROPÄISCHE PATENTSCHRIFT

(11) **EP 1 138 010 B1**
(45) Veröffentlichungstag und Bekanntmachung des Hinweises auf die Patenterteilung: **05.06.2002**
(21) Anmeldenummer: 99957934.5
(22) Anmeldetag: 28.10.1999
(51) Int. Cl.: G06K 7/00, G06K 13/08

(54) **KARTENLESER**
CARD READER
LECTEUR DE CARTES

(30) Priorität: 10.11.1998 DE 29820057 U
(43) Veröffentlichungstag der Anmeldung: 04.10.2001
(73) Patentinhaber: ddm hopt + schuler GmbH & Co. KG, D-78628 Rottweil (DE)
(72) Erfinder: HOPT, Rudolf DI, 00 (DE); HOPT, Jürgen, D-78628 Rottweil (DE); STORZ, Michael, D-78467 Konstanz (DE)
(74) Vertreter: KOHLER SCHMID + PARTNER
(86) Internationale Anmeldenummer: DE9903445
(87) Internationale Veröffentlichungsnummer: WO0028465

(56) Entgegenhaltungen:
- EP-A- 0 351 103
- EP-A- 0 704 813
- EP-A- 0 727 758

## Beschreibung

Die Erfindung betrifft einen Kartenleser für Karten, insbesondere Chipkarten, mit einem Schieber, der im Kartenleser über seitlich des Schiebers angeordnete Absenkführungen, welche in Einführrichtung der Karte schräg zur Kartenbahn verlaufen, geführt ist, und der, von der Karte bei der Einführbewegung mitgenommen, die Karte auf Kontakte des Kartenlesers absenkt.

Ein derartiger Kartenleser ist beispielsweise durch die EP-A-0 351 103 bekannt geworden.

Bei diesem bekannten Kartenleser wird eine Karte mit ihrem Kontaktfeld während der Einführbewegung auf federnde Kontakte des Kartenlesers abgesenkt, damit ein Datenaustausch zwischen Kartenleser und Karte stattfinden kann. Das Absenken der Karte erfolgt mittels eines Schiebers, der in den starren Seitenwänden des Kartenlesers vorgesehenen Absenkführungen geführt ist und von der Karte, diese absenkend, beim Einführen mitgenommen wird. Die starren Seitenwände sind im Kartenleser seitlich der Kartenbahn vorgesehen, so daß sie auch der seitlichen Führung der Karte beim Einführen dienen.

Wenn in einen solchen bekannten Kartenleser z.B. zu Manipulationszwecken eine Karte, die eine größere Kartenstärke als normale Karten aufweist, eingeführt wird, müssen die am Schieber dann zusätzlichen wirkenden Kräfte von den Führungselementen des Schiebers aufgenommen werden. Auf Dauer kann dies zum Abbrechen der Führungselemente führen.

Es ist daher die Aufgabe der Erfindung, bei einem Kartenleser der eingangs genannten Art solche auf den Schieber beim Absenken wirkenden Kräfte besser aufnehmen zu können.

Diese Aufgabe wird erfindungsgemäß dadurch gelöst, daß die Absenkführungen an einem die Kartenbahn übergreifenden, federnd gelagerten Arm vorgesehen sind. Der Arm kann z.B. einseitig, vorzugsweise an seinem in Einführrichtung vorderen Ende, gehäuseseitig befestigt sein.

Der mit der Erfindung erzielte Vorteil besteht darin, daß der federnd gelagerte Arm die auf den Schieber wirkenden Kräfte durch Verschwenken leicht aufnehmen kann. Vorzugsweise sind die Absenkführungen in den Seitenwänden einer Aussparung im Arm vorgesehen. Der Arm kann z.B. als eine Gehäusezunge ausgebildet sein.

Bei vorteilhaften Ausführungsformen der Erfindung übergreift der Arm die Karte etwa mittig, so daß die auf den Schieber wirkenden Kräfte gleichmäßig verteilt auf beide Führungen des Arms übertragen werden.

Wenn die Breite des Arms schmaler als die Breite der Karte ist, können seitlich des Arms weitere Komponenten des Kartenlesers angeordnet werden. Dadurch ist eine weitere Miniaturisierung des Kartenlesers möglich.

Bei bevorzugten Ausführungsformen der Erfindung übergreift der Arm die Kartenbahn im Bereich der Kontakte des Kartenlesers. Für den Datenaustausch ist es ausreichend, wenn die Karte zumindest im Bereich ihres Kontaktfeldes mittels des Schiebers mit definiertem Anpreßdruck auf die Kontakte des Kartenlesers abgesenkt wird. Vorzugsweise entspricht in diesem Fall die Breite des Schiebers und damit auch die Breite des Arms etwa der Breite des auf der Karte vorgesehenen Kontaktfeldes, also bei normalen Chipkarten, wie z.B. bei einer Telefonkarte, etwa einem Viertel bis Fünftel der Kartenbreite.

An dem in Einführrichtung hinteren Ende des Arms kann ein Leitsteg vorgesehen sein, mittels dem auch eine in Einführrichtung gekrümmte Karte in die korrekte Kartenbahn gelenkt wird.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: eine Draufsicht auf einen erfindungsgemäßen Kartenleser; und
- Fig. 2: eine Seitenansicht des in Fig. 1 gezeigten Kartenlesers.

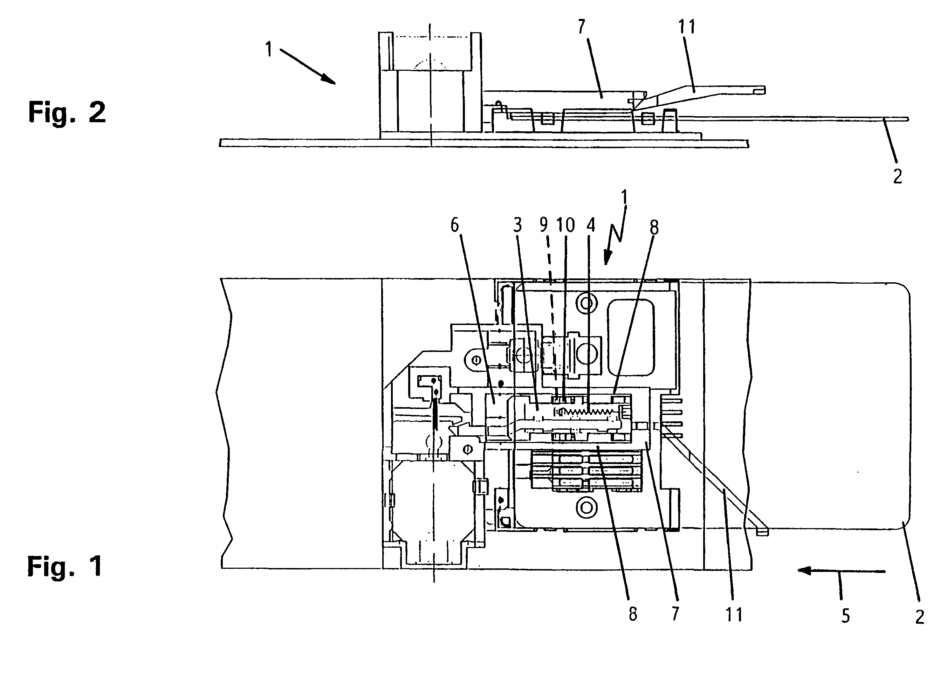

In den Fign. 1 und 2 ist schematisch ein Kartenleser **1** gezeigt, in den eine einen integrierten Schaltkreis tragende Karte **2** mittels eines Schiebers **3** gegen die Kraft einer Feder **4** in Einführrichtung **5** bis in ihre dargestellte Leseposition eingeführt wird. In dieser Leseposition ist die Karte 2 auf federnde Kontakte (nicht dargestellt) des Kartenlesers 1 abgesenkt, so daß über ein Kontaktfeld auf der Karte 2 der Datenaustausch zwischen Kartenleser 1 und Karte 2 stattfinden kann.

Der Schieber 3 ist in einer Aussparung **6** eines die Kartenbahn entgegen der Einführrichtung 5 frei übergreifenden Armes **7** seitlich geführt. Dazu sind an den beiden Seitenwänden **8** der Aussparung 6 Absenkführungen **9** vorgesehen, die in Einführrichtung 5 schräg zur Kartenbahn verlaufen und in denen Führungselemente **10** des Schiebers 3 geführt sind. Beim Einführen der Karte 2 senkt der Schieber 3, von der Karte 2 in Einführrichtung 5 mitgenommen, die Karte 2 auf die Kontakte des Kartenlesers 1 ab. Der Schieber 3 zusammen mit dem Arm 7 bildet auch das Gegenlager für die Karte 2, wenn diese in der Leseposition die federnden Kontakte des Kartenlesers 1 gegen deren Federkraft herunterdrückt.

Der Arm 7 ist einseitig, nämlich an seinem in Einführrichtung 5 vorderen Ende, gehäuseseitig befestigt und dadurch federnd gelagert. An seinem hinteren Ende ist ein Leitsteg **11** gehalten, mittels dem eine in Einführrichtung gekrümmte Karte trotzdem in eine korrekte Kartenbahn unterhalb des Arms 7 geführt wird. Der Arm 7 übergreift im gezeigten Ausführungsbeispiel die Karte 2 nur im Bereich ihres Kontaktfeldes, so daß die Breite des Arms 7 etwa der Breite des auf der Karte 2 vorgesehenen Kontaktfeldes entspricht. Durch Hochschwenken des federnd gelagerten Arms 7 können Kräfte, die auf den Schieber 3 schräg zur Kartenbahn wirken, elastisch aufgenommen werden.

## Patentansprüche

1. Kartenleser (1) für Karten, insbesondere Chipkarten, mit einem Schieber (3), der im Kartenleser (1) über seitlich des Schiebers (3) angeordnete Absenkführungen (9), welche in Einführrichtung (5) der Karte (2) schräg zur Kartenbahn verlaufen, geführt ist, und der, von der Karte (2) bei der Einführbewegung mitgenommen, die Karte (2) auf Kontakte des Kartenlesers (1) absenkt,
**dadurch gekennzeichnet,**
**daß** die Absenkführungen (9) an einem die Kartenbahn übergreifenden, federnd gelagerten Arm (7) vorgesehen sind.

2. Kartenleser nach Anspruch 1, **dadurch gekennzeichnet, daß** der Arm (7) einseitig, vorzugsweise an seinem in Einführrichtung (5) vorderen Ende, befestigt ist.

3. Kartenleser nach Anspruch 1 oder 2, **dadurch gekennzeichnet, daß** der Arm (7) als Gehäusezunge ausgebildet ist.

4. Kartenleser nach einem der vorhergehenden Ansprüche, **dadurch gekennzeichnet, daß** der Arm (7) die Karte (2) etwa mittig übergreift.

5. Kartenleser nach einem der vorhergehenden Ansprüche, **dadurch gekennzeichnet, daß** die Breite des Arms (7) schmaler als die Breite der Karte (2) ist.

6. Kartenleser nach einem der vorhergehenden Ansprüche, **dadurch gekennzeichnet, daß** der Arm (7) die Kartenbahn im Bereich der Kontakte des Kartenlesers (1) übergreift.

7. Kartenleser nach Anspruch 6, **dadurch gekennzeichnet, daß** die Breite des Arms (7) etwa der Breite des auf der Karte (2) vorgesehenen Kontaktfeldes entspricht.

8. Kartenleser nach einem der vorhergehenden Ansprüche, **dadurch gekennzeichnet, daß** an dem in Einführrichtung (5) hinteren Ende des Arms (7) ein Leitsteg (11) vorgesehen ist.

## Claims

1. A card reader (1) for cards, in particular chip cards, with a slider (3) which is guided in the card reader (1) by means of lowering guides (9) disposed laterally of the slider (3) and extending obliquely to the card path in the direction (5) of insertion of the card (2) and which, entrained by the card (2) during the insertion movement, lowers the card (2) onto contacts of the card reader (1), **characterised in that** the lowering guides (9) are provided on a spring mounted arm (7) which engages over the card path.

2. A card reader according to claim 1, **characterised in that** the arm (7) is fixed at one end, preferably at its end which is in front in the direction (5) of insertion.

3. A card reader according to claim 1 or 2, **characterised in that** the arm (7) is constructed as a housing tongue.

4. A card reader according to one of the preceding claims, **characterised in that** the arm (7) engages substantially centrally over the card (2).

5. A card reader according to one of the preceding claims, **characterised in that** the width of the arm (7) is narrower than the width of the card (2).

6. A card reader according to one of the preceding claims, **characterised in that** the arm (7) engages over the card path in the region of the contacts on the card reader (1).

7. A card reader according to claim 6, **characterised in that** the width of the arm (7) corresponds substantially to the width of the contact field provided on the card (2).

8. A card reader according to one of the preceding claims, **characterised in that** a guide web (11) is provided at the end of the arm (7) which is at the rear in the direction of insertion.

## Revendications

1. Lecteur de cartes (1) pour des cartes, en particulier des cartes à puce, équipé dune glissière (3), qui est guidée par l'intermédiaire de guidages d'abaissement (9) disposés latéralement à la glissière (3), qui s'étendent obliquement à la piste de la carte dans le sens d'introduction (5) de la carte (2), et qui, entraînés par la carte (2) lors du mouvement d'introduction, abaissent la carte (2) sur des contacts du lecteur de cartes (1), **caractérisé en ce que** les guidages d'abaissement (9) sont prévus sur un bras (7) supporté élastiquement, recouvrant la piste de la carte.

2. Lecteur de cartes selon la revendication 1, **caractérisé en ce que** le bras (7) est fixé d'un seul côté, de préférence à son extrémité antérieure dans le sens d'introduction (5).

3. Lecteur de cartes selon la revendication 1 ou 2, **caractérisé en ce que** le bras (7) est réalisé sous la forme d'une languette du boîtier.

4. Lecteur de cartes selon une des revendications précédentes, **caractérisé en ce que** le bras (7) recouvre la carte (2) à peu près centralement.

5. Lecteur de cartes selon une des revendications précédentes, **caractérisé en ce que** la largeur du bras (7) est inférieure à la largeur de la carte (2).

6. Lecteur de cartes selon une des revendications précédentes, **caractérisé en ce que** le bras (7) recouvre la piste de la carte à proximité des contacts du lecteur de cartes (1).

7. Lecteur de cartes selon la revendication 6, **caractérisé en ce que** la largeur du bras (7) correspond à peu près à la largeur de la zone de contacts prévue sur la carte (2).

8. Lecteur de cartes selon une des revendications précédentes, **caractérisé en ce qu'**à l'extrémité postérieure du bras (7) dans la direction d'introduction (5), est prévue une barrette de guidage (11).
